# EUROPEAN PATENT APPLICATION

(11) **EP 3 352 119 A1**
(43) Date of publication of application: **25.07.2018**
(21) Application number: 18152287.1
(22) Date of filing: 18.01.2018
(51) Int. Cl.: G06Q 20/20, G07G 1/14

(54) **INFORMATION PROCESSING APPARATUS AND INFORMATION PROCESSING SYSTEM**

(30) Priority: 19.01.2017 JP 2017007291
(71) Applicant: Toshiba TEC Kabushiki Kaisha, Tokyo 141-0032 (JP)
(72) Inventor: Ishikawa, Hiroyuki, Tokyo, 141-8562 (JP); Oishi, Sadatoshi, Tokyo, 141-8562 (JP); Tsuchida, Sunao, Tokyo, 141-8562 (JP)
(74) Representative: Hoffmann Eitle

(57) **Abstract**

According to an embodiment, an information processing apparatus includes a communication device and a processor. The communication device performs communication through a plurality of wireless communication channels. The processor transmits and receives data to and from a peripheral device related to settlement processing through a predetermined communication channel through the communication device. When a predetermined event has occurred, the processor transmits first information to another information processing apparatus through a communication channel different from the predetermined communication channel through the communication device.

## Description

### CROSS-REFERENCE TO RELATED APPLICATION

This application is based upon and claims the benefit of priority from the prior Japanese Patent Application No. 2017-007291, filed on January 19, 2017, the entire contents of which are incorporated herein by reference.

### FIELD

Embodiments described herein generally relate to an information processing apparatus and an information processing system including a plurality of information processing apparatuses.

### BACKGROUND

Some point of sale (POS) terminals used for payment of products and the like perform wireless communication with a peripheral device such as a scanner, a printer, a keyboard, or the like through a predetermined communication channel.

To avoid contact, a POS terminal performs communication with the peripheral device, using a different communication channel from other POS terminals arranged in a store or the like.

Meanwhile, the POS terminal may perform wireless multi-hop communication with other POS terminals or the like.

When conducting the multi-hop communication, the POS terminal needs to use the same communication channel as the other POS terminals.

Conventionally, the POS terminals cannot achieve both the wireless communication with the peripheral devices and the multi-hop communication.

### SUMMARY OF THE INVENTION

One of the objects of the present invention is to improve prior art techniques and overcome at least some of the prior art problems as for instance above illustrated.

According to a first aspect of the present invention, it is provided an information processing apparatus that performs settlement processing of a product, using data from a peripheral device, the information processing apparatus comprising:
a communication device configured to perform communication through a plurality of wireless communication channels; and
a processor configured to
transmit and receive data to and from the peripheral device related to the settlement processing through a predetermined communication channel of the plurality of communication channels through the communication device,
perform the settlement processing on the basis of the data from the peripheral device,
determine whether a predetermined event has occurred, and
transmit first information including information regarding the settlement processing, information regarding the information processing apparatus, or information regarding the peripheral device, to another first information processing apparatus, through a communication channel different from the predetermined communication channel through the communication device, when the processor determines that the predetermined event has occurred.

According to a second aspect of the present invention, it is provided an information processing system including a first information processing apparatus that performs settlement processing of a product, using data from a first peripheral device, and a second information processing apparatus that performs settlement processing of a product, using data from a second peripheral device,
the first information processing apparatus comprising:
a first communication device configured to perform communication through a plurality of wireless communication channels; and
a first processor configured to
transmit and receive data to and from the first peripheral device related to the settlement processing through a first communication channel of the plurality of communication channels through the first communication device,
perform the settlement processing on the basis of the data from the first peripheral device,
determine whether a predetermined event has occurred, and
transmit first information including information regarding the settlement processing by the first information processing apparatus, information regarding the first information processing apparatus, or information regarding the first peripheral device, to the second information processing apparatus through a second communication channel different from the first communication channel through the first communication device, when the first processor determines that the predetermined event has occurred, and
the second information processing apparatus comprising:
   a second communication device configured to perform communication through a plurality of wireless communication channels; and
   a second processor configured to
   transmit and receive data to and from the second peripheral device related to the settlement processing through the second communication channel through the second communication device,
   perform the settlement processing on the basis of the data from the second peripheral device,
   receive the first information from the first information processing apparatus through the second communication channel through the second communication device,
   determine whether a predetermined event has occurred, and
   transmit second information including information regarding the settlement processing by the second information processing apparatus, information regarding the second information processing apparatus, or information regarding the second peripheral device, and the first information, to a third information processing apparatus through a communication channel different from the second communication channel through the second communication device, when the second processor determines that the predetermined event has occurred.

### BRIEF DESCRIPTION OF THE DRAWINGS

Fig. 1 is a block diagram illustrating a configuration example of an information processing system according to an embodiment.
Fig. 2 is a block diagram illustrating a configuration example of a POS system according to an embodiment.
Fig. 3 is a block diagram illustrating a configuration example of a POS terminal according to an embodiment.
Fig. 4 is a block diagram illustrating a configuration example of a scanner according to an embodiment.
Fig. 5 is a block diagram illustrating a configuration example of a printer according to an embodiment.
Fig. 6 is a block diagram illustrating a configuration example of a keyboard according to an embodiment.
Fig. 7 is a flowchart illustrating an operation example of a POS terminal according to an embodiment.
Fig. 8 is a flowchart illustrating an operation example of a POS terminal according to an embodiment.

### DETAILED DESCRIPTION

According to one embodiment, an information processing apparatus performs settlement processing of products, using data from a peripheral device. The information processing apparatus includes a communication device and a processor.

The communication device performs communication through a plurality of wireless communication channels.

The processor transmits and receives data to and from the peripheral device related to the settlement processing through a predetermined communication channel, of the plurality of communication channels, through the communication device.

The processor performs the settlement processing on the basis of the data from the peripheral device.

The processor determines whether a predetermined event has occurred.

Further, when the processor determines that the predetermined event has occurred, the processor transmits first information to another first information processing apparatus on a communication channel different from the above predetermined communication channel through the communication device. The first information includes information regarding the settlement processing, information regarding the information processing apparatus itself, or information regarding the peripheral device.

Hereinafter, an embodiment will be described with reference to the drawings. In the drawings, the same sign indicates the same or similar part.

The information processing system according to an embodiment transmits POS system information from a POS terminal that performs wireless communication with a peripheral device.

The information processing system transmits the POS system information from a certain POS terminal to a predetermined terminal (for example, a router) through another POS terminal.

The information processing system is installed in, for example, a store that sells products.

For example, each of the POS terminals of the information processing system is installed in each place of the store.

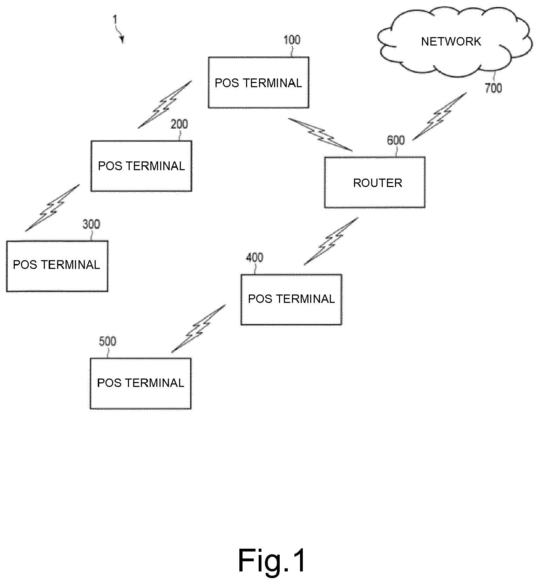

Fig. 1 is a block diagram illustrating a configuration example of an information processing system 1 according to an embodiment.

As illustrated in Fig. 1, the information processing system 1 includes POS terminals 100 to 500, a router 600, and the like.

The POS terminals 100 to 500 are devices that settle products and the like. The POS terminals 100 to 500 will be described in detail below.

The POS terminals 100 to 500 are arranged at positions where the POS terminals 100 to 500 can perform wireless communication with the adjacent POS terminals or the router 600.

The router 600 (information processing apparatus) is connected to a network 700. Further, the router 600 performs wireless communication with the POS terminals.

For example, the router 600 constructs a wireless network such as a wireless local area network (LAN) and performs wireless communication with the POS terminals.

Further, the router 600 transfers data (for example, the POS system information) from the POS terminals to the network 700.

Further, the router 600 may transmit data from the network 700 to the POS terminals.

The router 600 is arranged at a position where the router 600 can communicate with an adjacent POS terminal (for example, the POS terminal 100 or 400).

The network 700 is a communication network for transmitting data to other devices.

For example, the network 700 is the Internet. Further, the network 700 may be a unique communication network.

Next, a POS system formed by the POS terminal will be described.

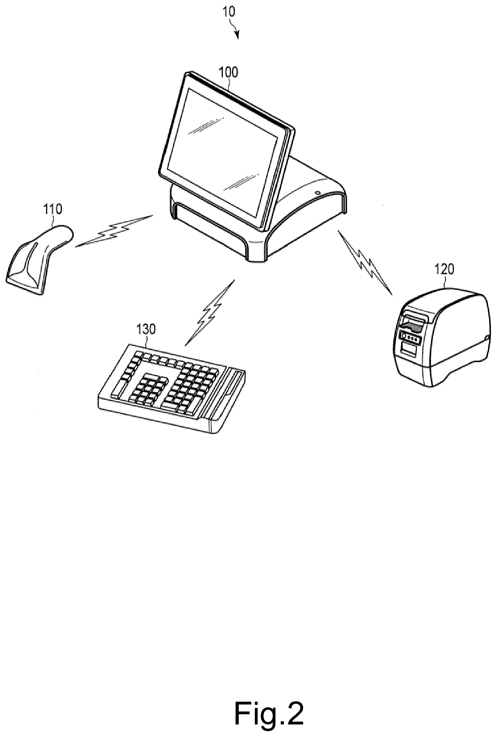

Here, the POS system formed by the POS terminal 100 will be described. Fig. 2 illustrates a configuration example of the POS system 10 formed by the POS terminal 100.

As illustrated in Fig. 2, a POS system 10 includes the POS terminal 100.

Further, the POS system 10 includes peripheral devices related to settlement processing.

Here, the POS system 10 includes, as the peripheral devices, a scanner 110, a printer 120, a keyboard 130, and the like.

In addition to the peripheral devices illustrated in Fig. 2, the POS system 10 may include peripheral devices as required.

For example, the POS system 10 may include, as the peripheral device, a stationary barcode scanner, a drawer, an automatic change machine, a credit card terminal, a personal identification number input machine, a point card terminal, or a customer display.

The POS terminal 100 (information processing apparatus) wirelessly transmits and receives data to and from the scanner 110, the printer 120, and the keyboard 130.

The POS terminal 100 performs settlement processing by transmitting and receiving data to and from the scanner 110, the printer 120, and the keyboard 130.

The scanner 110 reads a code attached to a product or the like.

The scanner 110 transmits data obtained by decoding the read code to the POS terminal 100.

The printer 120 prints predetermined data on the basis of a signal from the POS terminal 100.

For example, the printer 120 prints a receipt or credit details.

The keyboard 130 accepts an operation by an operator.

The keyboard 130 transmits information corresponding to the accepted operation to the POS terminal 100.

Next, a configuration example of the POS terminal will be described. Here, the POS terminal 100 will be described. The POS terminals 200 to 500 have the same configuration as that of the POS terminal 100, and therefore description is omitted.

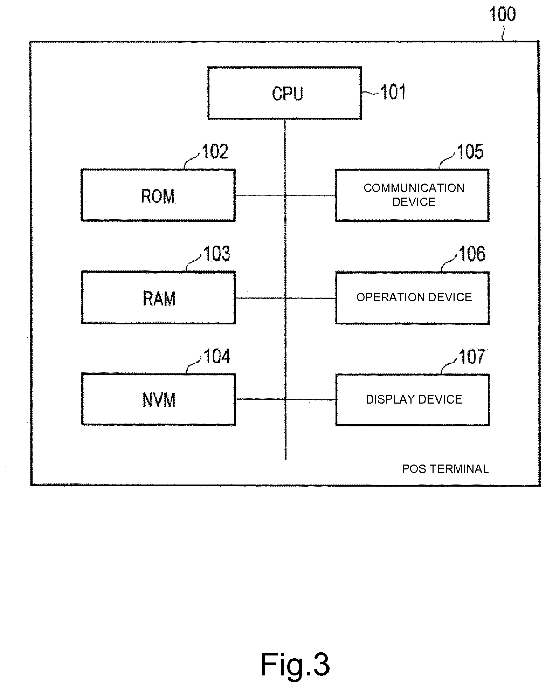

Fig. 3 is a block diagram illustrating a configuration example of the POS terminal 100.

As illustrated in Fig. 3, the POS terminal 100 includes, as a basic configuration, a processor 101, a read only memory (ROM) 102, a random access memory (RAM) 103, a non-volatile memory (NVM) 104, a communication device 105, an operation device 106, a display device 107, and the like.

These devices are connected to one another through a data bus.

Note that the POS terminal 100 may include a device as required in addition to the configuration as illustrated in Fig. 3.

The processor 101 is, for example, a central processing unit (CPU). Hereinafter, the processor 101 is referred to as a CPU 101. The CPU 101 has a function to control an overall operation of the POS terminal 100. The CPU 101 may include an internal cache, various interfaces, and the like.

The CPU 101 realizes various types of processing by executing a program stored in an internal memory, the ROM 102, or the NVM 104, in advance.

Note that some of the various functions realized by the CPU 101 by executing the program may be realized by a hardware circuit.

In this case, the CPU 101 controls functions executed by the hardware circuit.

The ROM 102 is a non-volatile memory in which a control program, control data, and the like are stored in advance.

The control program and the control data stored in the ROM 102 are incorporated in advance according to the specification of the POS terminal 100.

The ROM 102 stores, for example, a program (for example, BIOS) for controlling a circuit board of the POS terminal 100.

The RAM 103 is a volatile memory. The RAM 103 temporarily stores data under processing of the CPU 101 and the like.

The RAM 103 stores various application programs on the basis of instructions from the CPU 101.

Further, the RAM 103 may store data necessary for executing the application programs, execution results of the application programs, and the like.

The NVM 104 is a data writable and rewritable non-volatile memory.

The NVM 104 includes, for example, a hard disk, a solid state drive (SSD), an EEPROM (registered trademark), a flash memory, or the like.

The NVM 104 stores a control program, an application program, and various data according to operational use of the POS terminal 100.

The communication device 105 is an interface for wirelessly transmitting and receiving data to and from the peripheral devices such as the scanner 110, the printer 120, and the keyboard 130.

Further, the communication device 105 is an interface for wirelessly transmitting and receiving data to and from a communication device of another POS terminal.

The communication device 105 transmits predetermined data to the peripheral device or another POS terminal according to a signal from the CPU 101.

Further, the communication device 105 transmits data received from the peripheral device or another POS terminal to the CPU 101.

The communication device 105 sets one communication channel from a plurality of communication channels.

For example, the communication channels have different frequencies.

The communication device 105 sets the communication channel on the basis of a signal from the CPU 101.

The communication device 105 sets one communication channel from communication channels 1 to N.

When a predetermined communication channel is set, the communication device 105 does not perform communication through another communication channel.

For example, the communication device 105 does not accept an access through another communication channel.

For example, the communication device 105 may support a wireless LAN, Bluetooth (registered trademark) or the like.

Further, for example, the communication device 105 may support communication of Sub-GHz (for example, 900 MHz band).

The standard supported by the communication device 105 is not limited to a specific configuration.

Various operation instructions are inputted to the operation device 106 by an operator of the POS terminal 100.

The operation device 106 transmits a signal of an operation instruction input by the operator to the CPU 101.

The operation device 106 includes, for example, a keyboard, a ten-key pad, a touch panel, and the like.

The display device 107 displays various types of information under the control of the CPU 101.

The display device 107 is, for example, a liquid crystal monitor or the like.

In a case where the operation device 106 includes a touch panel or the like, the display device 107 may be integrally formed with the operation device 106.

Next, the scanner 110 will be described.

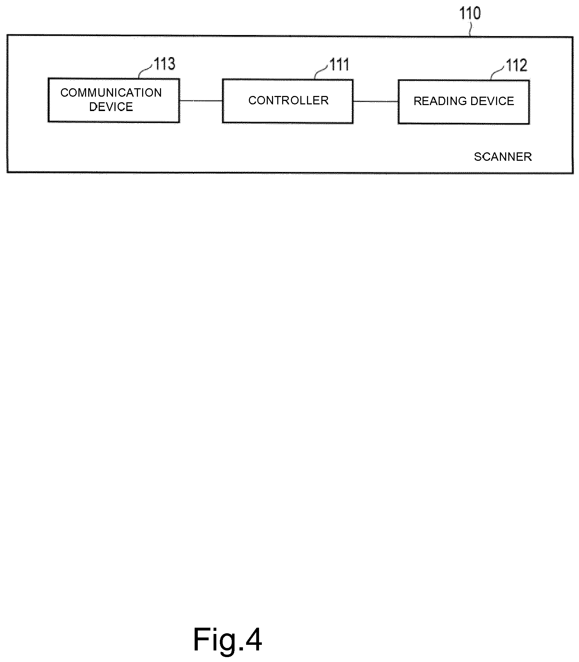

Fig. 4 is a block diagram illustrating a configuration example of the scanner 110.

As illustrated in Fig. 4, the scanner 110 includes, as a basic configuration, a controller 111, a reading device 112, a communication device 113, and the like.

These devices are connected to one another through a data bus.

Note that the scanner 110 may include a device as required in addition to the devices as illustrated in Fig. 4.

The controller 111 has a function to control an overall operation of the scanner 110.

The controller 111 may include a control circuit, an internal memory, or the like.

The reading device 112 reads a code attached to a product or the like.

For example, the reading device 112 reads a barcode, a two-dimensional code, or the like, as the code.

The reading device 112 transmits the read code to the controller 111.

For example, the reading device 112 includes illumination, a camera, and the like. The reading device 112 reads the code by irradiating the code with light from the illumination and acquiring reflected light using the camera.

Note that the reading device 112 may decode the code.

The reading device 112 may transmit the decoded data to the controller 111.

The communication device 113 is an interface for wirelessly transmitting and receiving data to and from the POS terminal 100 through a predetermined communication channel.

The communication device 113 transmits predetermined data to the POS terminal 100 according to a signal from the controller 111.

Further, the communication device 113 transmits data received from the POS terminal 100 to the controller 111.

The communication device 113 may set the communication channel by an operation of the operator, or the like.

Further, the communication device 113 may set the communication channel through communication with the POS terminal 100.

The controller 111 reads the code through the reading device 112.

For example, the controller 111 reads the code through the reading device 112 according to an operation of the operator.

The controller 111 decodes the read code.

The controller 111 transmits data obtained by decoding the code to the POS terminal 100 through the communication device 113.

Further, the controller 111 transmits scanner information regarding the scanner 110 to the POS terminal 100 through the communication device 113.

The controller 111 transmits the scanner information to the POS terminal 100 at predetermined timing.

For example, the controller 111 transmits the scanner information at the time of power-on, power-off, or at predetermined intervals.

For example, the scanner information includes battery information indicating a remaining amount of an internal battery, on/off information indicating on/off of the scanner, state information indicating occurrence of an abnormal state, operation time information indicating an operating time, temperature information indicating an internal temperature, and the like.

Next, the printer 120 will be described.

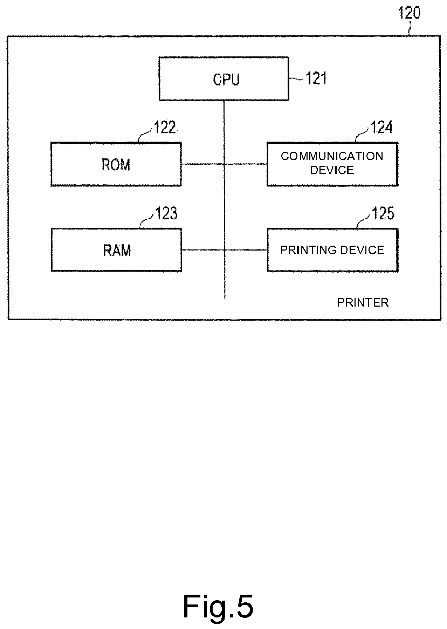

Fig. 5 is a block diagram illustrating a configuration example of the printer 120.

As illustrated in Fig. 5, the printer 120 includes a basic configuration, a CPU 121, a ROM 122, a RAM 123, a communication device 124, a printing device 125, and the like.

These devices are connected to one another through a data bus.

Note that the printer 120 may include a device as required in addition to the devices as illustrated in Fig. 5.

The CPU 121 has a function to control an overall operation of the printer 120.

The CPU 121 may include an internal cache, various interfaces, and the like.

The CPU 121 realizes various types of processing by executing a program stored in an internal memory or the ROM 122 in advance.

Note that some of the various functions realized by the CPU 121 by executing the program may be realized by a hardware circuit.

In this case, the CPU 121 controls the functions executed by the hardware circuit.

The ROM 122 is a non-volatile memory in which a control program, control data, and the like are stored in advance.

A control program and control data stored in the ROM 122 are incorporated in advance according to the specification of the printer 120.

The ROM 122 stores, for example, a program (for example, BIOS) for controlling a circuit board of the printer 120.

The RAM 123 is a volatile memory.

The RAM 123 temporarily stores data under processing of the CPU 121 and the like.

The RAM 123 stores various application programs on the basis of instructions from the CPU 121.

Further, the RAM 123 may store data necessary for executing the application programs, execution results of the application programs, and the like.

The communication device 124 is an interface for wirelessly transmitting and receiving data to and from the POS terminal 100 through a predetermined communication channel.

The communication device 124 transmits predetermined data to the POS terminal 100 according to a signal from the CPU 121.

Further, the communication device 124 transmits data received from the POS terminal 100 to the CPU 121.

The communication device 124 may set a communication channel by an operation of the operator, or the like.

Further, the communication device 124 may set the communication channel through communication with the POS terminal 100.

The printing device 125 prints an image according to a signal from the CPU 121.

For example, the printing device 125 includes a supply unit for supplying a paper, a conveyance motor for conveying the paper, a motor controller for controlling the conveyance motor, and a printing unit for performing printing on the paper.

For example, the supply unit stores the paper supported in a roll manner.

The conveyance motor conveys the paper from the supply unit to the printing unit by a signal from the motor controller or the like.

The printing unit prints a predetermined image on the paper supplied from the supply unit.

For example, the printing unit applies an ink to the paper to form the image.

Further, in a case where the paper is a thermal paper, the printing unit heats the paper to form the image.

For example, the printing unit includes a thermal head for heating the paper, a thermal head controller for controlling the thermal head, and the like.

The CPU 121 prints an image on the basis of data from the POS terminal 100.

For example, the CPU 121 receives print data indicating an image to be printed through the communication device 124.

The CPU 121 stores the received print data in the RAM 123.

The CPU 121 prints the print data on the paper through the printing unit according to the control program stored in the ROM 122.

The CPU 121 conveys the paper on which the print data has been printed and ejects the paper to an outside.

For example, the CPU 121 prints a receipt or credit details.

Further, the CPU 121 transmits printer information regarding the printer 120 to the POS terminal 100 through the communication device 124.

The CPU 121 transmits the printer information to the POS terminal 100 at predetermined timing.

For example, the CPU 121 transmits the printer information at the time of power-on, power-off, or at predetermined intervals.

For example, the printer information includes battery information indicating a remaining amount of an internal battery, on/off information indicating on/off of the printer, state information indicating occurrence of an abnormal state, operation time information indicating an operating time, temperature information indicating an internal temperature, total amount information indicating a total amount of printing, paper information indicating a remaining amount of papers, and the like.

Next, the keyboard 130 will be described.

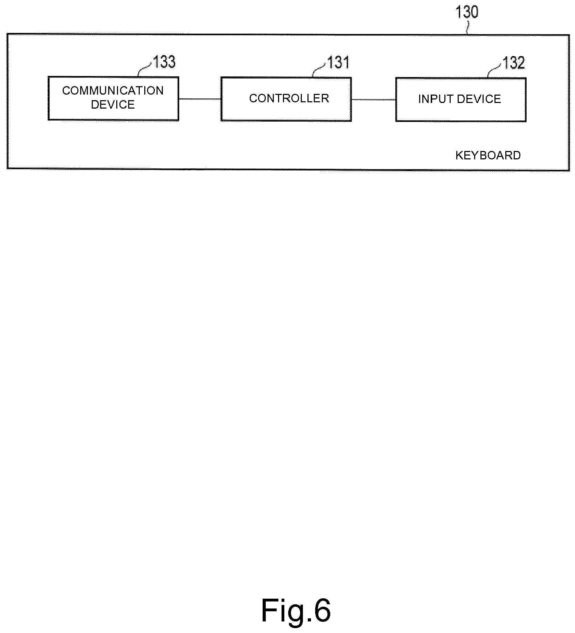

Fig. 6 is a block diagram illustrating a configuration example of the keyboard 130.

As illustrated in Fig. 6, the keyboard 130 includes, as a basic configuration, a controller 131, an input device 132, a communication device 133, and the like.

These devices are connected to one another through a data bus.

Note that the keyboard 130 may include a device as required in addition to the devices as illustrated in Fig. 6.

The controller 131 has a function to control an overall operation of the keyboard 130.

The controller 131 may include a control circuit, an internal memory, or the like.

The input device 132 receives an input of characters, numbers, or the like from the operator.

The input device 132 transmits a signal indicating the characters, numbers, or the like input by the operator to the controller 131.

The input device 132 includes a touch panel, a physical key, or the like.

The communication device 133 is an interface for wirelessly transmitting and receiving data to and from the POS terminal 100 through a predetermined communication channel.

The communication device 133 transmits predetermined data to the POS terminal 100 according to a signal from the controller 131.

Further, the communication device 133 transmits data received from the POS terminal 100 to the controller 131.

The communication device 133 may set a communication channel by an operation of the operator, or the like.

Further, the communication device 133 may set the communication channel through communication with the POS terminal 100.

The controller 131 transmits the characters, numbers, or the like input to the input device 132 to the POS terminal 100 through the communication device 133.

For example, the controller 131 accepts an input of the characters or numbers through the input device 132.

The controller 131 transmits information indicating the accepted characters or numbers to the POS terminal 100 through the communication device 133.

Further, the controller 131 transmits keyboard information regarding the keyboard 130 to the POS terminal 100 through the communication device 113.

The controller 131 transmits the keyboard information to the POS terminal 100 at predetermined timing.

For example, the controller 131 transmits the keyboard information at the time of power-on, power off, or at predetermined intervals.

For example, the keyboard information includes battery information indicating a remaining amount of an internal battery, on/off information indicating on/off of the keyboard, state information indicating occurrence of an abnormal state, operation time information indicating an operating time, temperature information indicating an internal temperature, and the like.

The POS system formed by the POS terminals 200 to 500 may be similar to the POS system formed by the POS terminal 100.

Further, the system formed by the POS terminals 200 to 500 may include a part of the scanner, the printer, and the keyboard, or may not include any of them.

Further, the system formed by the POS terminals 200 to 500 may include other devices as peripheral devices.

Further, the POS terminals 200 to 500 communicate with the peripheral devices connected thereto, using different communication channels from one another.

Note that the POS terminal may set the same communication channel as the communication channel of the POS terminal at a distance where communication does not interfere with each other.

Next, functions realized by the CPU 101 of the POS terminal 100 will be described.

First, the CPU 101 generates POS system information regarding the POS system 10.

For example, the POS system information includes settlement information regarding the settlement processing, information regarding the POS terminal 100, or information regarding the peripheral devices.

For example, the POS system information includes POS information regarding the POS terminal 100 and the like.

For example, the POS information includes ON/OFF information indicating ON/OFF of the POS terminal 100, state information indicating occurrence of an abnormal state, operation time information indicating an operation time, temperature information indicating an internal temperature, and the like.

Further, the POS system information includes information regarding the peripheral devices and the like.

For example, the POS system information includes the scanner information, the printer information, the keyboard information, or the like.

For example, the POS system information includes battery information, ON/OFF information, state information, operation time information, temperature information, and the like of the peripheral devices.

Further, the POS system information may include the settlement information regarding the settlement processing described below, and the like.

For example, the POS system information may include information such as settled goods and price.

The content of the POS system information is not limited to specific information and the like.

For example, the CPU 101 generates the on/off information of the CPU 101, the state information, the operation time information, the temperature information, or the like through various sensors.

The CPU 101 generates the POS information on the basis of the generated information.

Further, the CPU 101 receives the scanner information, the printer information, and the keyboard information from the scanner 110, the printer 120, and the keyboard 130, respectively.

For example, the CPU 101 may receive the scanner information, the printer information, and the keyboard information transmitted by the scanner 110, the printer 120, and the keyboard 130 at predetermined intervals.

Further, the CPU 101 may transmit a request to the scanner 110, the printer 120, and the keyboard 130, and acquire the scanner information of the scanner 110, the printer information of the printer 120, and the keyboard information of the keyboard 130 as responses to the request.

The CPU 101 generates the POS system information on the basis of the POS information, the scanner information, the printer information, the keyboard information, or the like.

The CPU 101 stores the generated POS system information in the NVM 104 or the like.

Further, the CPU 101 has a function to transmit a reception confirmation signal (scan signal) to be described below through a communication channel different from the current communication channel when a predetermined event occurs.

For example, the predetermined event is power ON or power OFF of the POS terminal 100.

Further, the predetermined event may be the fact that the settlement processing has been performed.

Further, the predetermined event may be passage of a longer time than an average interval of the settlement processing after the settlement processing is performed.

The content of the predetermined event is not limited to specific information.

When detecting the predetermined event, the CPU 101 changes the communication channel.

For example, the CPU 101 sets the communication channel 1 to the communication device 105.

When setting the communication channel 1, the CPU 101 transmits the reception confirmation signal (scan signal) through the communication device 105.

The reception confirmation signal (scan signal) is a signal for checking (scanning) whether reception by another POS terminal or the router 600 is possible. Hereinafter, the reception confirmation signal is referred to as a scan signal.

For example, the scan signal is a signal that requests another POS terminal to send a reception notification signal for notifying reception. Hereinafter, the reception notification signal is referred to as an ACK (ACKnowledgement) signal.

The CPU 101 changes the communication channel and transmits the scan signal at predetermined intervals.

For example, the CPU 101 transmits the scan signal through the communication channel 1.

If the CPU 101 has not received the ACK signal for a predetermined period, the CPU 101 sets the next communication channel (for example, the communication channel 2) to the communication device 105.

When setting the communication channel 2, the CPU 101 transmits the scan signal through the communication channel 2.

The CPU 101 repeats the above operation until transmitting the scan signal through the communication channel N.

Further, the CPU 101 has a function to transmit the POS system information to another POS terminal or the router 600 when receiving the ACK signal from the another POS terminal or the router 600.

For example, the CPU 101 receives the ACK signal with respect to the scan signal from another POS terminal or the router 600 through the communication device 105 through the currently set communication channel.

When receiving the ACK signal, the CPU 101 transmits the POS system information to the another POS terminal or the router 600 through the communication device 105.

Further, as described below, the CPU 101 sometimes stores the POS system information of other than its own POS terminal to the NVM 104.

In a case where the NVM 104 stores the POS system information of other than its own POS terminal, the CPU 101 transmits the POS system information of its own POS terminal and the POS system information of other than its own POS terminal to the another POS terminal or the router 600 through the communication device 105.

Further, the CPU 101 receives the scan signal from another POS terminal through the communication device 105 through the communication channel in which data is transmitted and received to and from the peripheral devices.

The CPU 101 has a function to transmit an ACK signal to the another POS terminal when receiving the scan signal.

For example, the CPU 101 determines whether having received the scan signal through the communication device 105.

When determining that the scan signal has been received, the CPU 101 transmits the ACK signal to the POS terminal as the transmission source of the scan signal.

Further, the CPU 101 transmits the ACK signal to another POS terminal through the communication device 105.

The CPU 101 has a function to receive the POS system information from the another POS terminal when transmitting the ACK signal.

For example, the CPU 101 maintains the communication channel when receiving the ACK signal.

Further, the CPU 101 waits until receiving the POS system information from the another POS terminal.

When receiving the POS system information from the another POS terminal, the CPU 101 stores the POS system information (POS system information of other than its own POS terminal) to the NVM 104.

Further, the CPU 101 may store a plurality of pieces of the POS system information of other than its own POS terminal to the NVM 104.

As described above, when receiving the ACK signal from another POS terminal in a state where the POS system information of other than its own POS terminal is stored in the NVM 104, the CPU 101 transmits its own POS system information and the POS system information of other than its own POS terminal to the another POS terminal.

In the example illustrated in Fig. 1, for example, when the CPU 101 receives the POS system information of the POS terminal 200 from the POS terminal 200 and stores the POS system information in the NVM 104, the CPU 101 transmits its own POS system information and the POS system information of the POS terminal 200 to the router 600 when receiving the ACT signal from the router 600.

Further, the CPU 101 has a function to perform the settlement processing of products and the like.

For example, the CPU 101 performs the settlement processing on the basis of the data from peripheral devices such as the scanner 110, the printer 120, and the keyboard 130.

For example, the CPU 101 acquires product information indicating the price of a product from a code attached to the product through the scanner 110.

The CPU 101 performs settlement of the products or the like on the basis of the product information or the like.

Further, the CPU 101 may print information regarding the settlement processing on a paper through the printer 120.

For example, the CPU 101 prints a receipt or credit details through the printer 120.

Further, when performing the settlement processing, the CPU 101 may generate the settlement information regarding the settlement processing.

Next, an operation example of the POS terminal 100 will be described.

First, an operation example in which the POS terminal 100 transmits the POS system information to another POS terminal or the router 600 will be described.

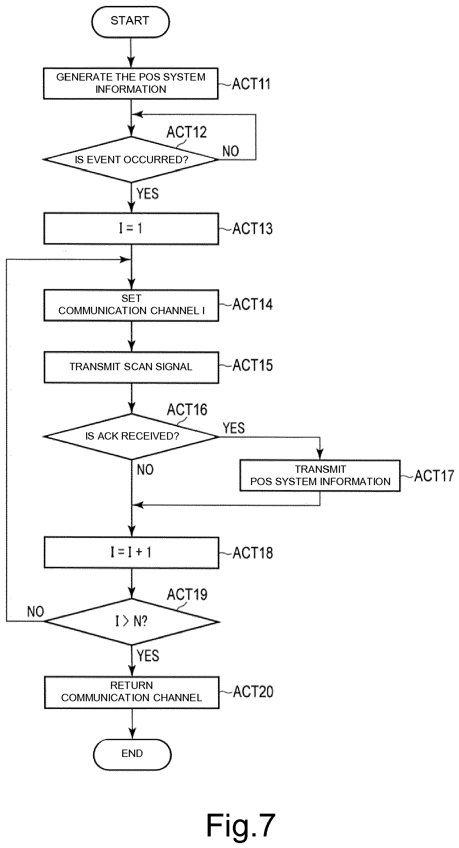

Fig. 7 is a flowchart illustrating an operation example in which the POS terminal 100 transmits the POS system information.

Here, assuming that the POS terminal 100 transmits and receives data to and from the scanner 110, the printer 120, and the keyboard 130 through a predetermined communication channel.

First, in ACT 11, the CPU 101 of the POS terminal 100 generates the POS system information.

When the POS system information is generated, the processing of the CPU 101 is moved onto to ACT 12.

In ACT 12, the CPU 101 determines whether a predetermined event has occurred.

When it is determined that the predetermined event has not occurred (NO in ACT 12), the processing of the CPU 101 is returned to ACT 12.

When it is determined that the predetermined event has occurred (YES in ACT 12), the processing of the CPU 101 is moved onto to ACT 13.

In ACT 13, the CPU 101 substitutes 1 for a variable "I".

When 1 is substituted for the variable "I", the processing of the CPU 101 is moved onto to ACT 14.

In ACT 14, the CPU 101 sets the communication channel I to the communication device 105.

When the communication channel I is set, the processing of the CPU 101 is moved onto to ACT 15.

In ACT 15, the CPU 101 transmits the scan signal through the communication device 105.

When the scan signal is transmitted, the processing of the CPU 101 is moved onto to ACT 16.

In ACT 16, the CPU 101 determines whether having received the ACK signal from another POS terminal or the router 600.

When it is determined that the ACK signal has been received from the another POS terminal or the router 600 (YES in ACT 16), the processing of the CPU 101 is moved onto to ACT 17.

In ACT 17, the CPU 101 transmits its own POS system information to the another POS terminal or the router 600 through the communication device 105.

In a case where the NVM 104 stores the POS system information of other than its own POS terminal, the CPU 101 transmits the POS system information of other than its own POS terminal together with its own POS system information.

Meanwhile, when it is determined that the ACK signal has not been received from another POS terminal or the router 600 for a predetermined period (NO in ACT 16), the processing of the CPU 101 is moved onto to ACT 18.

Further, when the POS system information has been transmitted (see ACT 17), the processing of the CPU 101 is moved onto to ACT 18.

In ACT 18, the CPU 101 increments the variable "I".

When the variable "I" is incremented, the processing of the CPU 101 is moved onto ACT 19.

In ACT 19, the CPU 101 determines whether "I" > "N" is established (N is the maximum number of the communication channels).

When it is determined that "I" > "N" is not established (NO in ACT 19), the processing of the CPU 1 is returned to ACT 14.

When it is determined that "I">"N" is established (YES in ACT 19), the processing of the CPU 101 is moved onto ACT 20.

In ACT 20, the CPU 101 sets the original communication channel (the communication channel in and before ACT 13) to the communication device 105.

When the original communication channel is set, the CPU 101 terminates the operation.

Note that the CPU 101 may update the POS system information at predetermined timing.

For example, the CPU 101 may update the POS system information while a predetermined event does not occur (during NO in ACT 12).

Next, an operation example in which the POS terminal 100 receives the POS system information from another POS terminal will be described.

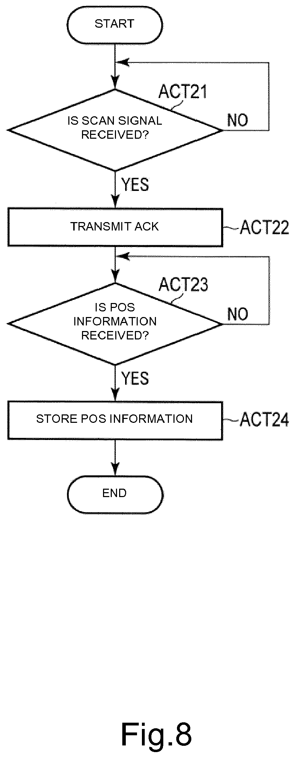

Fig. 8 is a flowchart illustrating an operation example in which the POS terminal 100 receives the POS system information.

Here, assuming that the POS terminal 100 transmits and receives data to and from the scanner 110, the printer 120, and the keyboard 130 through a predetermined communication channel.

For example, the following operation is performed while no predetermined event occurs (during NO in ACT 11 in Fig. 8).

First, in the ACT 21, the CPU 101 of the POS terminal 100 determines whether having received the scan signal from another POS terminal through the communication device 105.

When it is determined that the scan signal has not been received (NO in ACT 21), the processing of the CPU 101 is returned to ACT 21.

When it is determined that the scan signal has been received (YES in ACT 21), the processing of the CPU 101 is moved onto to ACT 22.

In ACT 22, the CPU 101 transmits the ACK signal to the POS terminal which transmits the scan signal through the communication device 105.

When the ACK signal has been transmitted, the processing of the CPU 101 is moved onto ACT 23.

In ACT 23, the CPU 101 determines whether having received the POS system information from the POS terminal which transmits the scan signal through the communication device 105.

When it is determined that the POS system information has not been received (NO in ACT 23), the processing of the CPU 101 is returned to ACT 23.

When it is determined that the POS system information has been received (YES in ACT 23), the processing of the CPU 101 is moved onto to ACT 24.

In ACT 24, the CPU 101 stores the received POS system information in the NVM 104.

When the POS system information has been stored in the NVM 104, the CPU 101 terminates the operation.

Note that the CPU 101 may further receive the POS system information of another POS terminal.

The CPU 101 stores the POS system information of the another POS terminal in the NVM 104.

In the information processing system 1, the POS terminals 100 to 500 perform the above operations.

As a result, the information processing system 1 transmits the POS system information of the POS terminals to the router 600 by multi-hop communication.

The router 600 transmits the POS system information to other devices through the network 700.

Note that the information processing system 1 may transmit the POS system information of the POS terminals to the router 600 through a predetermined transmission path.

As described above, the POS terminal changes the communication channel and scans another POS terminal (transmits the scan signal) when detecting a predetermined event while the POS terminal is communicating with a peripheral device through a predetermined communication channel.

When the POS terminal finds another POS terminal in the changed communication channel, the POS terminal transmits the POS system information to the another POS terminal.

As a result, the POS terminal can transmit the POS system information to the another POS terminal through a communication channel different from the communication channel for communicating with the peripheral device.

Therefore, the POS terminal can perform the multi-hop communication while performing wireless communication with its own peripheral device.

Further, the POS terminal communicates with its own peripheral device through a different communication channel from another POS terminal while the predetermined event is not detected.

As a result, the POS terminal can be prevented from contact with a peripheral device of another POS terminal.

Therefore, the POS terminal can realize the communication channel for both the wireless communication with its own peripheral device and for the multi-hop communication.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing apparatus that performs settlement processing of a product, using data from a peripheral device, the information processing apparatus comprising:
a communication device configured to perform communication through a plurality of wireless communication channels; and
a processor configured to
transmit and receive data to and from the peripheral device related to the settlement processing through a predetermined communication channel of the plurality of communication channels through the communication device,
perform the settlement processing on the basis of the data from the peripheral device,
determine whether a predetermined event has occurred, and
transmit first information including information regarding the settlement processing, information regarding the information processing apparatus, or information regarding the peripheral device, to another first information processing apparatus, through a communication channel different from the predetermined communication channel through the communication device, when the processor determines that the predetermined event has occurred.

2. The information processing apparatus according to claim 1, wherein
the processor changes the communication channel of the communication device to the plurality of communication channels and transmits a reception confirmation signal at predetermined intervals through the communication device, when the processor determines that the predetermined event has occurred.

3. The information processing apparatus according to claim 2, wherein,
when the processor receives a reception notification signal to the reception confirmation signal from the another first information processing apparatus through a certain communication channel of the plurality of channels, the processor transmits the first information to the another first information processing apparatus through the communication channel through which the reception notification signal has been received.

4. The information processing apparatus according to any of claims 1 to 3, wherein
the processor sets the predetermined communication channel to the communication device, when the processor has transmitted the first information to the another first information processing apparatus through the communication device.

5. The information processing apparatus according to any of claims 1 to 4, wherein
the processor receives, from another second information processing apparatus, through the predetermined communication channel through the communication device, second information including information regarding the settlement processing by the another second information processing apparatus, information regarding the another second information processing apparatus, or information regarding a peripheral device of the another second information processing apparatus.

6. The information processing apparatus according to claim 5, wherein
the processor transmits the first information and the second information to the another first information processing apparatus through the communication device.

7. An information processing system including a first information processing apparatus that performs settlement processing of a product, using data from a first peripheral device, and a second information processing apparatus that performs settlement processing of a product, using data from a second peripheral device,
the first information processing apparatus comprising:
a first communication device configured to perform communication through a plurality of wireless communication channels; and
a first processor configured to
transmit and receive data to and from the first peripheral device related to the settlement processing through a first communication channel of the plurality of communication channels through the first communication device,
perform the settlement processing on the basis of the data from the first peripheral device,
determine whether a predetermined event has occurred, and
transmit first information including information regarding the settlement processing by the first information processing apparatus, information regarding the first information processing apparatus, or information regarding the first peripheral device, to the second information processing apparatus through a second communication channel different from the first communication channel through the first communication device, when the first processor determines that the predetermined event has occurred, and
the second information processing apparatus comprising:
a second communication device configured to perform communication through a plurality of wireless communication channels; and
a second processor configured to
transmit and receive data to and from the second peripheral device related to the settlement processing through the second communication channel through the second communication device,
perform the settlement processing on the basis of the data from the second peripheral device,
receive the first information from the first information processing apparatus through the second communication channel through the second communication device,
determine whether a predetermined event has occurred, and
transmit second information including information regarding the settlement processing by the second information processing apparatus, information regarding the second information processing apparatus, or information regarding the second peripheral device, and the first information, to a third information processing apparatus through a communication channel different from the second communication channel through the second communication device, when the second processor determines that the predetermined event has occurred.

8. The information processing system according to claim 7, wherein
the first processor changes the communication channel of the first communication device to the plurality of communication channels and transmits a reception confirmation signal at predetermined intervals through the first communication device, when the first processor determines that the predetermined event has occurred.

9. The information processing system according to claim 8, wherein,
when the first processor receives a reception notification signal to the reception confirmation signal from the second information processing apparatus through a certain communication channel of the plurality of communication channels, the first processor transmits the first information to the second information processing apparatus through the communication channel through which the reception notification signal has been received.

10. The information processing system according to claim 7, wherein
the first processor sets the first communication channel to the first communication device, when the first processor has transmitted the first information to the second information processing apparatus through the first communication device.
